# EUROPEAN PATENT APPLICATION

(11) **EP 1 686 745 A1**
(43) Date of publication of application: **02.08.2006**
(21) Application number: 06250482.4
(22) Date of filing: 28.01.2006
(51) Int. Cl.: H04L 12/56, H04Q 7/20, H04B 7/26

(54) **Apparatus and method for transmitting or receiving data through a plurality of wireless links grouped in a single virtual MAC interface**

(30) Priority: 01.02.2005 KR 2005009185
(71) Applicant: Samsung Electronics Co., Ltd., Suwon-si, Gyeonggi-Do (KR)
(72) Inventor: Seo, Jeong-hwan, Suwon-si Gyeonggi-do (KR); Kim, Se-hong, Yeongtong-gu Suwon-si Gyeonggi-do (KR); Nam, Sang-su, Yeongdeungpo-gu Seoul (KR); Mun, Byung-in, Yeongtong-gu Suwon-si Gyeonggi-do (KR); Choi, Hye-eun, Gangnam-gu Seoul (KR)
(74) Representative: Robinson, Ian Michael

(57) **Abstract**

A method and a network device for communicating data through a plurality of wireless links are provided. A network device includes a virtual MAC information packet (VIP) management unit (730) for transmitting or receiving information on the plurality of wireless links; a transmitted frame processing unit (740) for allocating frames to be transmitted to a specified wireless link and transmitting the frames; and a channel allocation unit (710) for receiving a wireless link allocation request, selecting a wireless link, and to transfer the information on the selected wireless link to the transmitted frame processing unit (740); wherein wireless data communications are performed through a virtual MAC address. The method includes transmitting or receiving information on the plurality of wireless links; and allocating frames to be transmitted to a specified wireless link among the plurality of wireless links and transmitting the frames using the virtual MAC address.

## Description

The present invention relates to wireless links in a wireless network environment, and more particularly, to an apparatus and method for transmitting or receiving data through a plurality of wireless links, rather than through a single wireless link, in a wireless network interface.

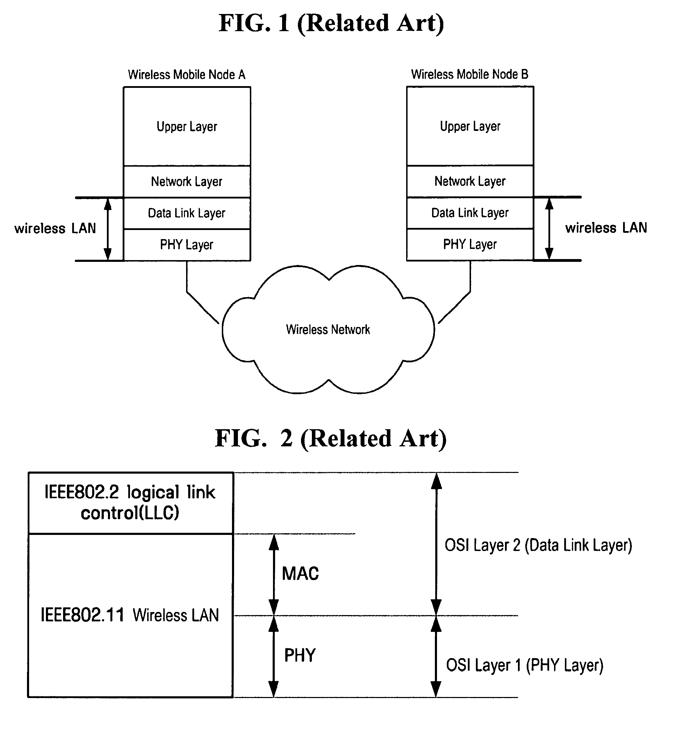

Figure 1 is an exemplary view illustrating a hierarchical structure of a related art wireless network. Referring to Figure 1, the hierarchical structure of the wireless network is represented corresponding to International Organization for Standardization (ISO) Open System Interconnection (OSI) 7 Layer.

In Figure 1, an upper layer corresponds to a transport layer, a session layer, a presentation layer and an application layer of the OSI 7 Layer. In this hierarchical structure of the wireless network, a data link layer and a physical (PHY) layer are layers which are defined as the wireless local area network (LAN) standard, and perform inherent functions of a wireless LAN.

A role of the data link layer of the wireless network is to perform error control of the wireless link, access control of nodes to the wireless network, and other similar functions known in the art. Also, a role of the physical layer of the wireless network is to transmit wireless packets by carrying data on a wireless frequency.

Figure 2 is an exemplary view illustrating an IEEE 802.11 structure that is one of the related art wireless network standards. In Figure 2, the IEEE 802.11 structure is illustrated in comparison to the structure of the ISO OSI 7 Layer, shown in Figure 1.

Referring to Figure 2, a data link layer is divided into a logical link control (LLC) layer and a Media Access Control (MAC) layer. The LLC layer performs synchronization and error control of OSI Layer 2, and the MAC layer performs access control of wireless media of neighboring nodes. An IEEE 802.11 wireless LAN prescribes functions of the MAC layer and the physical (PHY) layer among functions of the wireless LAN.

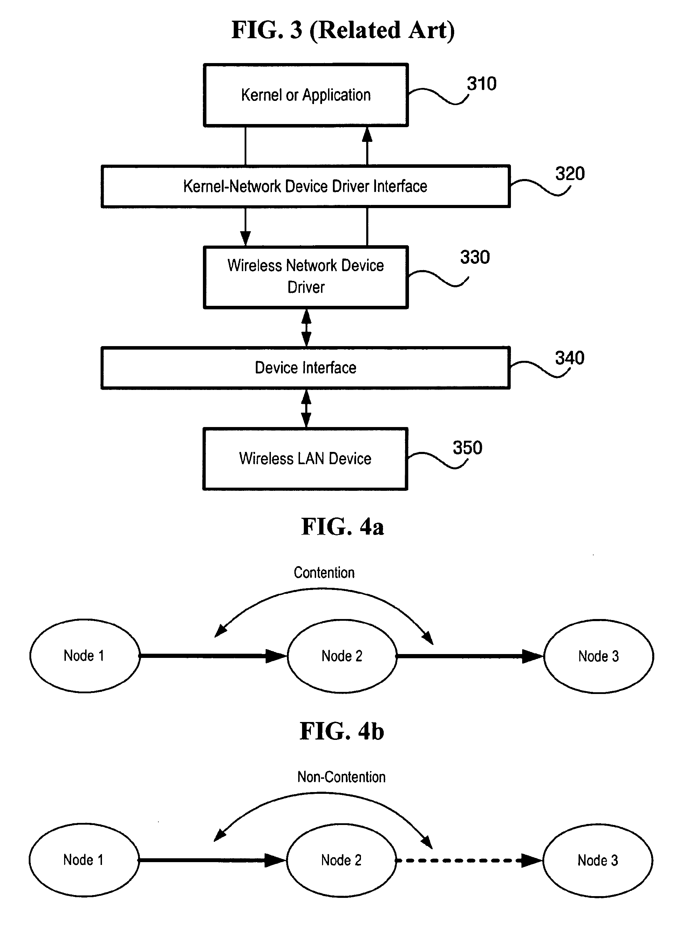

Figure 3 is an exemplary view illustrating a general structure of a related art wireless LAN terminal device. The conventional wireless LAN terminal device includes a wireless LAN device 350 that wirelessly transmits/receives wireless packets through a wireless network, and a wireless network device driver 330 that controls the wireless LAN device 350 and connects the wireless LAN device 350 to a kernel or an application 310. The kernel or application 310 may include the network layer as illustrated in Figure 1, and for example, it makes it possible to provide a wireless frame transmission/reception service through a kernel-network device driver interface 320 using an IP (Internet Protocol). In the network layer as described above, packets generated in the application layer or packets that are received from neighboring nodes to be routed arrive. The network layer receives the transferred wireless packets, finds a proper routing path, and selects a corresponding network interface to transmit the transferred wireless packets to a wireless link. In the case where the wireless LAN device 350 receives the wireless packets from the neighboring nodes, the wireless LAN device 350 transfers the wireless packets received through a device interface 340 to the wireless network device driver 330, and then the wireless network device driver 330 transfers the wireless packets to the network layer through the kernel-network device driver interface 320. The network layer transfers the received wireless packets to a proper application layer that will process the wireless frames.

In the wireless network environment, a data transmission speed in a wireless channel is lower than that in a wire channel, and is varied according to channel environments. In order to overcome these drawbacks, it is necessary to transmit data using a plurality of wireless links. Also, if the channel environment of the wireless link deteriorates during data transmission, it is necessary to transmit the data using another wireless link to overcome the instability of the wireless link. In this case, it is advantageous to use a plurality of wireless links in a wireless network interface rather than a related art construction and method that use a single wireless link in a wireless network interface. However, a frame rearrangement problem, i.e., a problem that frames arrive at a destination with their orders changed, may occur when a plurality of wireless links are used in a network interface.

According to the present invention there is provided an apparatus and method as set forth in the appended claims. Preferred features of the invention will be apparent from the dependent claims, and the description which follows.

The present invention aims generally to address the above-mentioned problems occurring in the prior art, and an aspect of the present invention is to provide a method for transmitting or receiving wireless packets through a plurality of wireless links in a wireless network interface.

Another aspect of the present invention is to provide a method for addressing a frame rearrangement problem that may occur when a plurality of wireless links are used in a network interface.

These and other aspects of the invention will be set forth in part in the description which follows and in part will become apparent to those having ordinary skill in the art upon examination of the following or may be learned from practice of the invention.

According to an exemplary embodiment of the present invention, there is provided a network device, for communicating data through a plurality of wireless links, which has a virtual MAC address that represents MAC addresses for identifying respective wireless LAN devices on a network. The network device includes a virtual MAC information packet (VIP) management unit which is configured to transmit or receive information on the plurality of wireless links; a transmitted frame processing unit which is configured to allocate frames to be transmitted to a specified wireless link among the wireless links and to transmit the frames; and a channel allocation unit which is configured to receive a wireless link allocation request from the transmitted frame processing unit, to select a wireless link to which the frames will be allocated by using the information on the plurality of wireless links, and to transfer the information on the selected wireless link to the transmitted frame processing unit; wherein wireless data communications with neighboring wireless network devices are performed through the virtual MAC address.

According to another exemplary embodiment of the present invention, there is provided a method for communicating data through a plurality of wireless links of a network device, which has a plurality of wireless LAN devices and a virtual MAC address that represents MAC addresses for identifying the plurality of wireless LAN devices, respectively. The method includes transmitting or receiving information on the plurality of wireless links for communication of wireless data with neighboring wireless network devices; and allocating frames to be transmitted to a specified wireless link among the plurality of wireless links and transmitting the frames using the virtual MAC address; wherein the allocating operation allocates the frames to the specified wireless link using the information on the wireless link in accordance with a wireless link allocation request.

The above and other aspects of the present invention will be more apparent from the following detailed description taken in conjunction with the accompanying drawings, in which:
Figure 1 is an exemplary view illustrating a hierarchical structure of a related art wireless network;
Figure 2 is an exemplary view illustrating an IEEE 802.11 structure that is one of the related art wireless network standards;
Figure 3 is an exemplary view illustrating a general structure of a related art wireless LAN terminal device;
Figure 4a is an exemplary view showing a topology in a related art network;
Figure 4b is an exemplary view showing a topology according to an exemplary embodiment of the present invention;
Figure 5a is an exemplary view showing another topology in a related art network;
Figure 5b is an exemplary view showing another topology according to another exemplary embodiment of the present invention;
Figure 6 is a block diagram illustrating the construction of a wireless network device according to an exemplary embodiment of the present invention;
Figure 7 is a block diagram illustrating the construction of a virtual MAC driver according to an exemplary embodiment of the present invention;
Figure 8 is a block diagram illustrating the construction of a channel allocation unit according to an exemplary embodiment of the present invention;
Figure 9 is a block diagram illustrating the construction of a channel quality measurement unit according to an exemplary embodiment of the present invention;
Figure 10 is a block diagram illustrating the construction of a VIP management unit according to an exemplary embodiment of the present invention;
Figure 11 is an exemplary view illustrating the structure of a virtual MAC terminal DB according to an exemplary embodiment of the present invention;
Figure 12 is an exemplary view explaining a frame rearrangement problem;
Figure 13 is an exemplary view illustrating the structure of a channel allocation database (DB) according to an exemplary embodiment of the present invention;
Figure 14 is an exemplary view explaining the basic concept for addressing the frame rearrangement problem according to an exemplary embodiment of the present invention;
Figure 15 is an exemplary view illustrating a method for addressing the frame rearrangement problem according to an exemplary embodiment of the present invention; and
Figure 16 is a flowchart illustrating a method for transmitting or receiving data through a plurality of wireless links through a virtual MAC driver according to an exemplary embodiment of the present invention.

Hereinafter, exemplary embodiments of the present invention will be described in detail with reference to the accompanying drawings. However, the present invention is not limited to the exemplary embodiments disclosed hereinafter, but can be implemented in diverse forms. The matters defined in the description, such as the detailed construction and elements, are nothing but specific details provided to assist those of ordinary skill in the art in a comprehensive understanding of the invention, and the present invention is only defined within the scope of the appended claims. In the whole description of the present invention, the same drawing reference numerals are used for the same elements across various figures.

The present invention is also described hereinafter with reference to flowchart illustrations of user interfaces, methods, and computer program products according to exemplary embodiments of the invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

And each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

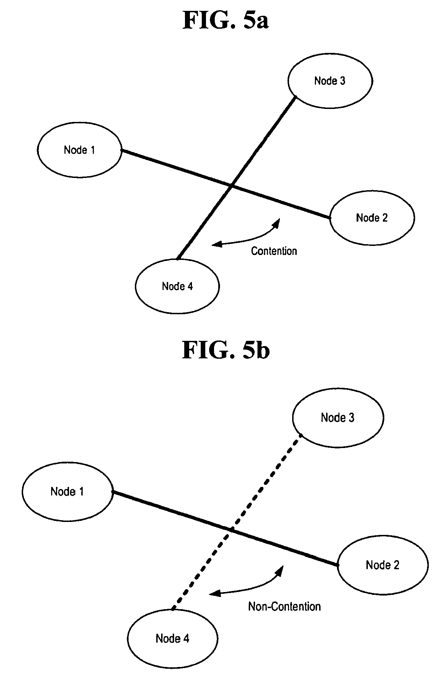

For easy understanding of the present invention, exemplary embodiments of the present invention will now be explained using the contents illustrated in Figures 4a, 4b, 5a and 5b, which show types of data transmission or reception among respective nodes in a mobile ad-hoc network (MANET) environment.

Figure 4a shows a related art topology in that node 2 transmits data received from node 1 to node 3. That is, node 2 serves to relay data. In this case, since a data transmission between node 1 and node 2 and a data transmission between node 2 and node 3 are performed through the same channel, a contention occurs in order to secure a channel for transmitting a data. Due to this contention occurrence, data loss may occur. By contrast, Figure 4b shows a topology according to an exemplary embodiment of the present invention. In this case, a data transmission between node 1 and node 2 and a data transmission between node 2 and node 3 are performed through different channels, and thus no contention occurs.

Figure 5a shows another related art topology in that node 1 and node 2 transmit or receive data with each other and node 3 and node 4 transmit or receive data with each other. In this case, the data transmission between node 1 and node 2 and the data transmission between node 3 and node 4 are performed through the same channel, and thus a contention occurs to secure a channel for transmitting data in the same manner as that illustrated in Figure 4a. Due to this contention occurrence, data loss may occur. By contrast, Figure 5b shows a topology according to an exemplary embodiment of the present invention. In this case, a data transmission between node 1 and node 2 and a data transmission between node 3 and node 4 are performed through different channels, and thus no contention occurs.

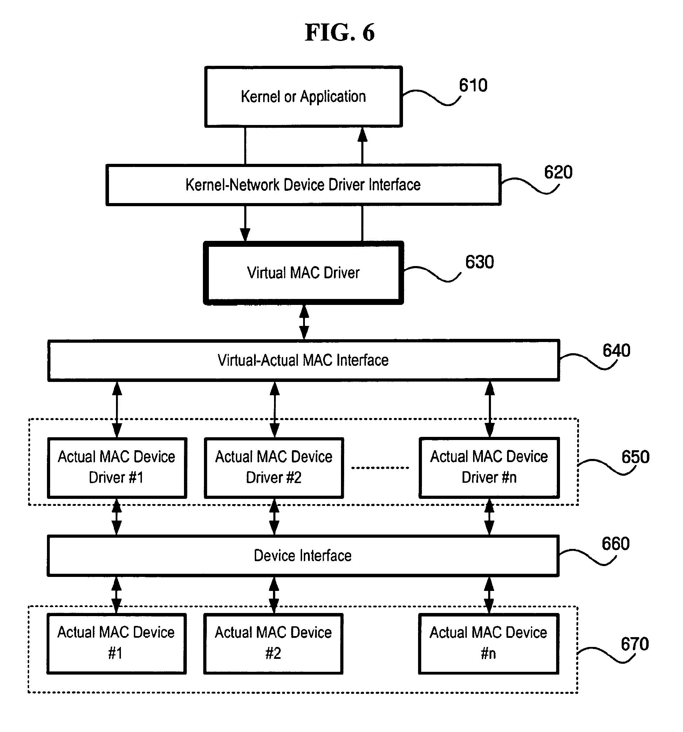

Figure 6 is a block diagram illustrating the construction of a wireless network device according to an exemplary embodiment of the present invention. Referring to Figure 6, the wireless network device according to an exemplary embodiment of the present invention includes a plurality of actual MAC devices 670, a plurality of actual MAC device drivers 650 corresponding to the respective actual MAC devices 670, a device interface 660 for interfacing the actual MAC devices 670 and the actual MAC device drivers 650, a virtual MAC driver 630, a virtual-actual MAC interface 640 for interfacing the actual MAC device drivers 650 and the virtual MAC driver 630, a kernel or an application 610, and a kernel-network device driver interface 620 for interfacing the virtual MAC driver 630 and the kernel or application 610. Here, the kernel or application 610 corresponds to the kernel or application 310 as illustrated in Figure 3.

The actual MAC devices 670 send or receive wireless packets by hardware through a wireless network, and the respective actual MAC devices 670 use wireless links. The links may be predetermined. The actual MAC device drivers 650 drive the corresponding actual MAC devices 670 through the device interface 660. Here, the actual MAC devices 670 may be separately constructed by hardware, or may be implemented on a single board.

Although a plurality of wireless interfaces corresponding to the plurality of actual MAC devices 670 exist, the virtual MAC driver 630 operates as if one wireless interface exists. Accordingly, the virtual MAC driver 630 has a virtual MAC address that represents respective MAC addresses of the plurality of actual MAC devices 670, and communicates with other network devices by using the virtual MAC address. In addition, the virtual MAC driver 630 manages wireless links corresponding to the plurality of actual MAC devices 670. That is, the wireless network device can use data links for wireless channels, i.e., wireless links, through the virtual MAC driver 630, select optimum wireless links by checking the respective wireless link statuses, and address the frame rearrangement problem. The detailed construction and operation of the virtual MAC driver 630 will be described later.

The actual MAC devices 670 and the actual MAC drivers 650 correspond to existing wireless LAN devices and drivers in the case where the wireless network apparatus does not use the virtual MAC driver 630 according to an exemplary embodiment of the present invention. An actual MAC device and an actual MAC driver provide a wireless link to the virtual MAC driver 630. These wireless links are set to use specific channels, and the channels can be used by the wireless links without any interference.

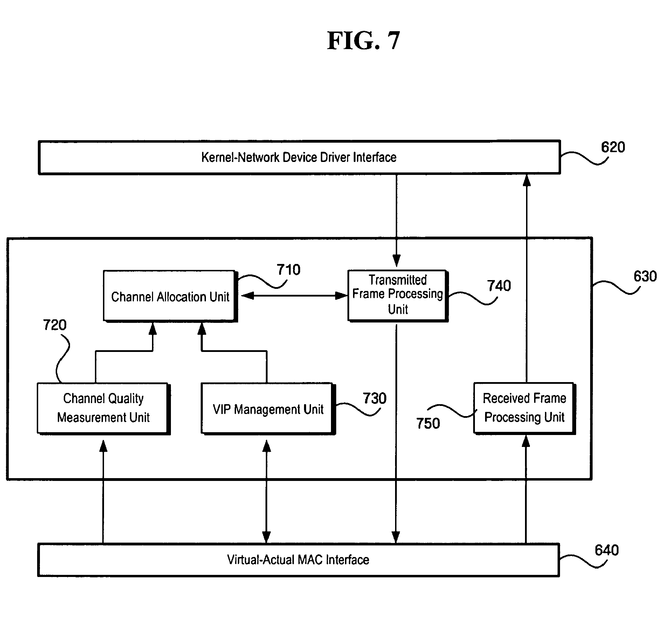

Figure 7 is a block diagram illustrating the construction of a virtual MAC driver 630 according to an exemplary embodiment of the present invention. Referring to Figure 7, the virtual MAC driver includes a channel allocation unit 710, a channel quality measurement unit 720, a virtual MAC information packet (VIP) management unit 730, a transmitted frame processing unit 740, and a received frame processing unit 750.

The term "unit", as used herein, means, but is not limited to, a software or hardware component, such as a field programmable gate array (FPGA) or application specific integrated circuit (ASIC), or other such component known in the art, which performs certain tasks. A unit may advantageously be configured to reside on the addressable storage medium and configured to execute on one or more processors. Thus, a unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and units may be combined into fewer components and units or further separated into additional components and units. In addition, the components and units may be implemented so as to reproduce one or more CPUs in a device or security multimedia card.

The channel quality measurement unit 720 measures and analyzes the quality of channels corresponding to a plurality of wireless links. The channel quality measurement unit 720 can estimate the quality of the channel by using the status of a wireless signal and degree of contention occurrence in a MAC layer.

Information about the channel quality measured by the channel quality measurement unit 720 is used by the channel allocation unit 710 to allocate a channel to be used for a transmission of wireless frames.

The channel allocation unit 710 allocates specific channels to the transmitted frames on the basis of the resultant channel quality measured by the channel quality measurement unit 720.

Specifically, the channel allocation unit 710 distributes traffic to the respective wireless links by classifying the transmitted frames on the basis of source addresses and destination addresses and allocating the classified transmitted frames to a plurality of wireless links. Also, the channel allocation unit 710 may allocate wireless links having a good quality to the transmitted frames by referring to link quality information analyzed by the channel quality measurement unit 720 when allocating the wireless links to the transmitted frames, and thus the channel allocation unit 710 can stabilize the communication status even when specified wireless links are unstable.

The VIP management unit 730 transmits or receives channel information about usable wireless links to or from neighboring nodes. The VIP management unit 730 generates a virtual MAC information packet (VIP), and transmits the generated VIP to adjacent nodes.The VIP may be periodically transmitted, and may include channel information that is used by respective nodes.

Also, the VIP management unit 730 seizes the channels that the neighboring nodes are using by analyzing the VIPs received from the neighboring nodes. The channels being used by the neighboring nodes are used for checking whether the destination node can receive the transmitted frame through the corresponding channel when the channel allocation unit 710 allocates the channels according to the kinds of the channels.

The transmitted frame processing unit 740 receives the transmitted frames from the kernel or application 610, and transfers the received frames to the actual MAC device drivers 650. In this case, the transmitted frame processing unit 740 selects one among the plurality of wireless links, and transfers the transmitted frames through the selected wireless link. The transferring of the transmitted frame through the selected wireless link is performed through the channel allocated by the channel allocation unit 710 by referring to the channel allocation unit 710 for which wireless link the transmitted frames are to be transmitted through. For example, the transmitted frame processing unit 740 generates a query about the channel to which it should transmit the transmitted frames by transferring frame header information such as a destination MAC address, a destination IP address, and a source IP address, or other frame header information known in the art, to the channel allocation unit 710. The channel allocation unit 710 classifies the kinds of frames by using the frame header information, allocates a channel according to the kind of the frame, and transfers the value of this channel to the transmitted frame processing unit 740. The transmitted frame processing unit 740 transmits the transmitted frame through the wireless link corresponding to the channel value.

The received frame processing unit 750 receives the frames transferred from the actual MAC device 670 through the actual MAC device driver 650, and transfers the frames to the kernel or application 610. The received frame processing unit 750 multiplexes receiving paths according to the plurality of wireless links into one wireless network interface. That is, the frames received through the actual MAC device 670 of the wireless link are not directly transferred to the kernel or application 610 through the actual MAC device driver 650, but are transferred through the virtual MAC driver 630, so that all the wireless links can be recognized as one network interface.

The wireless LAN devices have inherent MAC addresses. The virtual MAC driver 630 makes the MAC addresses of all the wireless LAN devices connected to the virtual MAC driver 630 accord with a common MAC address. For example, if the wireless LAN devices use their MAC addresses as they are, a plurality of MAC addresses exist with respect to the same IP when address resolution protocol (ARP) requests are received from the neighboring nodes, and this causes the neighboring nodes to be unable to select the MAC addresses. Generally, the wireless LAN devices discard frames having destination addresses different from their MAC addresses. In this case, if the MAC addresses of the wireless links provided by the virtual MAC driver 630 are different from one another, the wireless LAN devices receive only the frames having their MAC addresses as the destination addresses and filter the frames having MAC addresses of other wireless links as the destination addresses, and thus the corresponding frames cannot be transferred to the virtual MAC driver 630.

Accordingly, the virtual MAC driver 630 makes the MAC addresses of all the wireless LAN devices connected to the virtual MAC driver 630 accord with one common MAC address, so that the plurality of wireless links are unified into one wireless network interface.

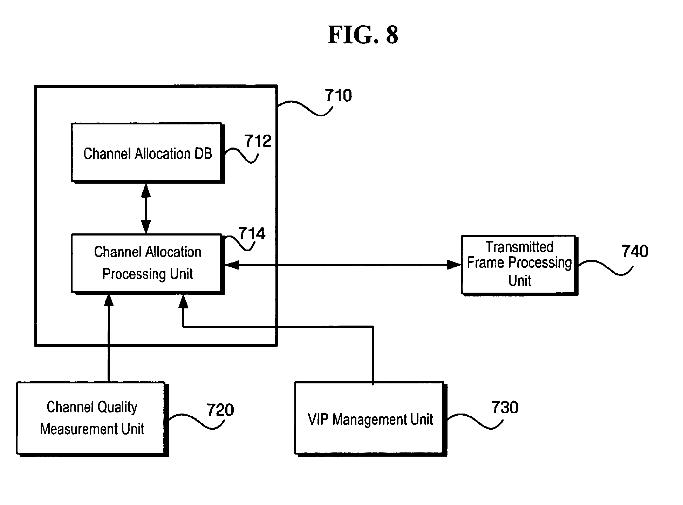

Figure 8 is a block diagram illustrating the construction of a channel allocation unit according to an exemplary embodiment of the present invention.

The channel allocation unit 710 according to the present invention includes a channel allocation processing unit 714 and a channel allocation DB 712.

The channel allocation processing unit 714 receives information on the channel quality from the channel quality measurement unit 720, and receives information on the channels that are presently used by other nodes from the VIP management unit 730. Then, the channel allocation processing unit 714 constructs the channel allocation DB 712 based on such information.

The channel allocation DB 712 includes information for providing an optimum wireless link when the frames are transmitted. If the channel allocation processing unit 714 receives the channel request from the transmitted frame processing unit 740, it searches the channel allocation DB 712 and provides an optimum wireless link to the transmitted frame processing unit 740.

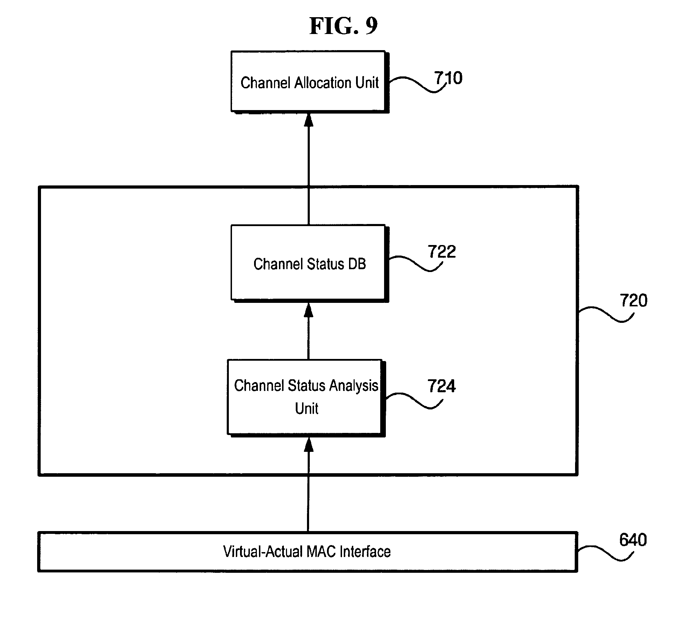

Figure 9 is a block diagram illustrating the construction of a channel quality measurement unit according to an exemplary embodiment of the present invention.

The channel quality measurement unit 720 includes a channel status analysis unit 724 and a channel status DB 722.

The channel status analysis unit 724 measures the link quality of the respective wireless link. The measurement elements are the channel status of a PHY layer and the degree of frame collision of a MAC layer, or other elements known in the art. The channel status of the PHY layer can be measured using the ratio of the power of the received signal to the noise power of the received signal, i.e., the signal-to-noise ratio (SNR). The degree of frame collision in the MAC layer is the degree of collision with a neighboring node during a frame transmission. The channel status analysis unit 724 calculates the quality of the respective channel on the basis of the above-described information, and stores the results of calculation in the channel status DB 722. The channel allocation unit 710 allocates a channel having a good quality to the transmitted frames by referring to the channel status DB 722.

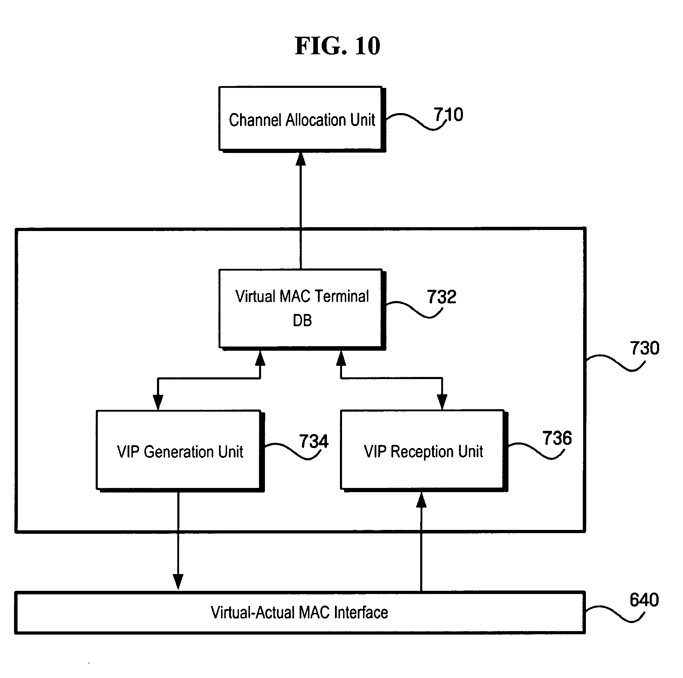

Figure 10 is a block diagram illustrating the construction of a VIP management unit according to an exemplary embodiment of the present invention.

The VIP management unit 730 includes a VIP generation unit 734, a VIP reception unit 736, and a virtual MAC terminal DB 732.

In the VIP management unit 730, the VIP generation unit 734 generates and transmits VIPs to neighboring nodes, or the VIP reception unit 736 receives the VIPs from the neighboring nodes. The VIP includes channel information that is used by the respective nodes. This channel information may be the number of wireless links and wireless channel numbers used by the respective links, or other channel information known in the art. Accordingly, the VIP reception unit 736 can judge whether the neighboring nodes are nodes that use the virtual MAC driver 630 by analyzing the VIPs received from the neighboring nodes, and can obtain information on which channel the wireless links of the nodes that use the virtual MAC driver 630 are set to. The information analyzed by the VIP reception unit 736 is stored in the virtual MAC terminal DB 732.

The information stored in the virtual MAC terminal DB 732 may be used to check whether the destination node of the frames can receive the transmitted frames through the channel when the channel allocation unit 710 allocates the corresponding channel to the transmitted frame.

The channel allocation unit 710 confirms whether the destination of the transmitted frames corresponds to the node that uses the virtual MAC driver from the information stored in the virtual MAC terminal DB 732, and if so, the channel allocation unit 710 allocates one of the channels that are commonly used by the corresponding node and the channel allocation unit 710 itself.

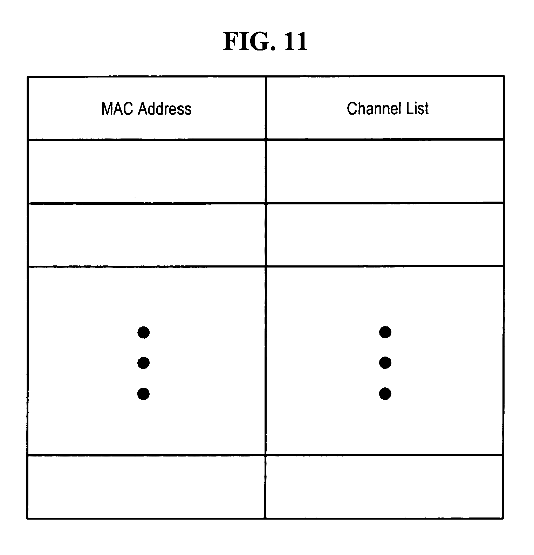

The virtual MAC terminal DB 732, as illustrated in Figure 11, includes a list of MAC addresses of nodes that use the virtual MAC driver and a channel list used by the nodes that use the virtual MAC driver, and this information can be obtained by the respective nodes' exchange of the VIPs.

When the frames are transmitted by distributing traffic to a plurality of wireless links using the virtual MAC driver 630, the order of the frames should not be changed in the frame receiving side.

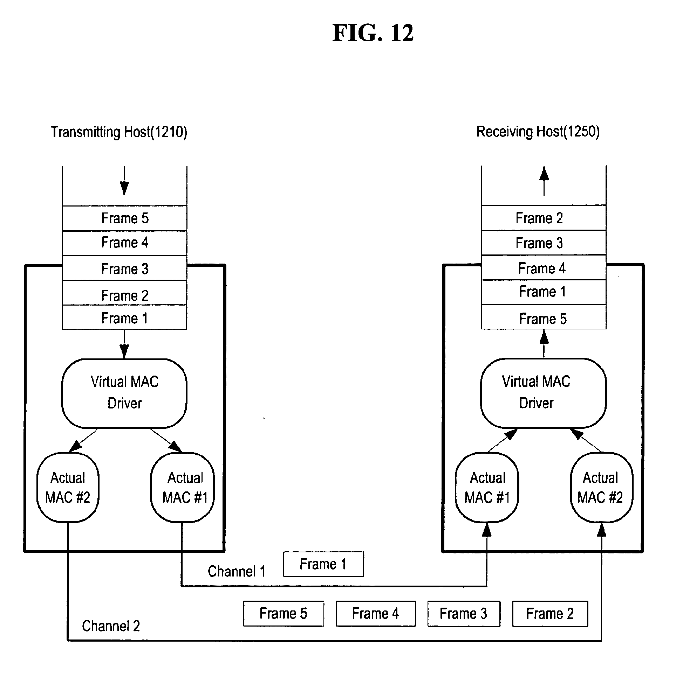

Figure 12 is an exemplary view explaining a frame rearrangement problem that may occur when the frames are distributed using the virtual MAC driver 630.

Referring to Figure 12, frames 1 to 5 are transferred in order to an IP layer of a transmitting host 1210 corresponding to the transmitting node, and then transmitted to a receiving host 1250 corresponding to the receiving node by the virtual MAC driver that uses two wireless links.

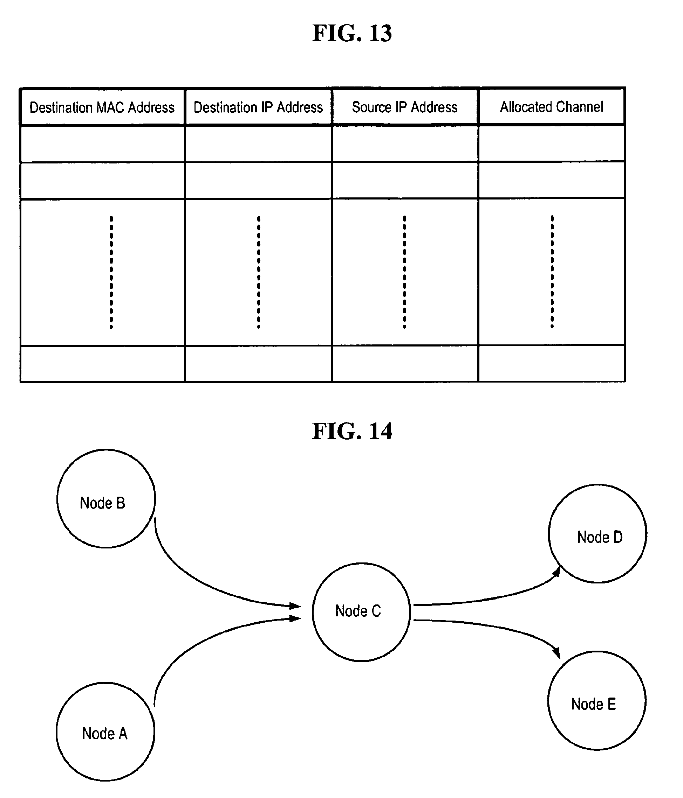

Frame 1 is transmitted by the virtual MAC driver of the transmitting host 1210 to an actual MAC #1, while frames 2 to 5 are transmitted to an actual MAC #2. The transmission of frame 1, for example, may be delayed in comparison to the usual case due to a low transmission speed or an obstacle to transmission, and thus the frames received in the receiving host 1250 corresponding to the receiving node may be transferred in the order of frame 2, frame 3, frame 4, frame 1, and frame 5. In this case, the virtual MAC driver of the receiving host 1250 transfers the frames to the IP layer of the receiving host 1250 in the above-mentioned wrong order, and the wrong order of the frames may cause an error to occur during a frame process in the upper layer of the receiving host 1250. In an exemplary embodiment of the present invention, in order to prevent this wrong frame order, a channel allocation DB 712 having a data structure as illustrated in Figure 13 may be used.

In the channel allocation DB 712 of the channel allocation unit 710, frames may be classified by destination MAC addresses, destination IP addresses and source IP addresses. The channel allocation processing unit 714 can keep the frame order unchanged by allocating the same channel to the same kind of frames.

In addition, the channel allocation processing unit 714 allocates different channels to the different kinds of frames having different destination MAC addresses, destination IP addresses and source IP addresses to distribute the traffic according to the kinds of frames.

In order to distribute frames to different channels, the host may relay the frames in multi-hop MANET environments.

Figure 14 is an exemplary view explaining the frame distribution function provided by the channel allocation unit 710 when nodes having virtual MAC drivers mounted thereon communicate with one another in the multi-hop MANET environments.

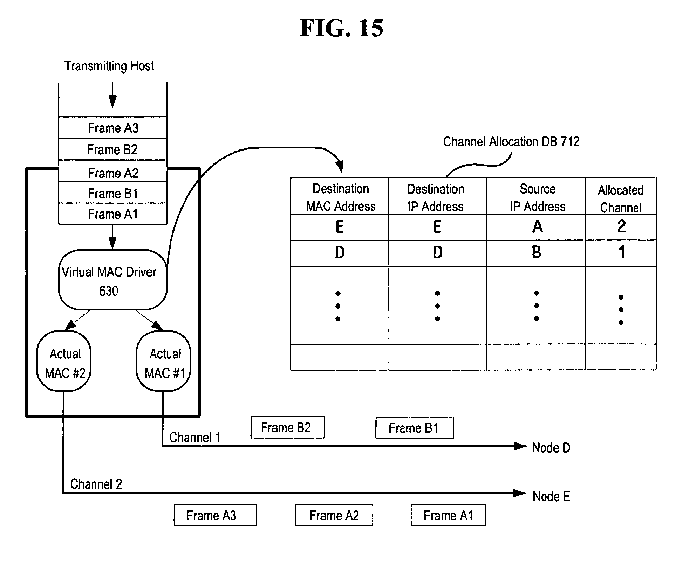

It is assumed that node C operates as a router or a frame relay node, and nodes B and A transmit packets to nodes D and E through node C, respectively. The virtual MAC driver of node C can provide a frame distribution function by transmitting the packets being transmitted from node B to node D and the packets being transmitted from node A to node E through two divided wireless links. In this case, the contents of the channel allocation DB 712 of the node C are illustrated in Figure 15.

Figure 15 is an exemplary view illustrating a method for addressing the frame rearrangement problem according to an exemplary embodiment of the present invention.

The frame that is transmitted from node B to node D, as seen from the transmitted frame processing unit of the virtual MAC driver of node C, has a destination MAC address "D", a destination IP address "D" and a source IP address "B". In the same manner, the frame that is transmitted from node A to node E has a destination MAC address "E", a destination IP address "E" and a source IP address "A".

The channel allocation unit of the virtual MAC address of node C, as illustrated in FIG. 15, classifies the frames into two kinds by using at least one of the destination MAC address, destination IP address and source IP address, and allocates the corresponding wireless links to two different channels. In Figure 15, node C receives frame B1 and frame B2 from node B, receives frame A1, frame A2 and frame A3 from node A, and transmits the received frames to node D and node E using channel 1 and channel 2. As shown in Figure 15, the order of the frames that arrive at node D or node E is not changed.

On the other hand, in the wireless network environment, communication channels are pre-designated or determined by scanning the channels, and at least one channel among a plurality of wireless links owned by the nodes that use the virtual MAC drivers is set as a common channel. In this case, the common channel is a channel through which all nodes that belong to the network can commonly communicate with one another. Using this common channel, a communication with nodes that do not use the virtual MAC driver becomes possible.

Now, a communication process between a node that uses the virtual MAC driver (hereinafter referred to as a "virtual driver node") and a node that does not use the virtual MAC driver (hereinafter referred to as a "non-virtual drive node") will be explained.

In performing a communication between the virtual driver node and the non-virtual driver node that belong to the same wireless network, the non-virtual driver node can receive a signal that is periodically broadcast and transmitted by the virtual driver node. In this case, the transmitted signal includes information on the wireless link that is communicable with the virtual driver node, and the non-virtual driver node can attempt to communicate with the virtual driver node using such information. As a result, since the non-virtual driver node uses one of the channels of the wireless links of the virtual driver node when the non-virtual driver node transmits a frame to the virtual driver node, the virtual driver node can receive the frame transmitted by the non-virtual driver node without any problem. However, if the wireless link of the virtual driver node is optionally selected when the virtual driver node transmits a frame to the non-virtual driver node, the frame may be transmitted through a channel that is not used by the non-virtual driver node, and this may cause the non-virtual driver node not to be able to receive the frame. Accordingly, when the virtual driver node intends to transmit a frame to the non-virtual driver node, the channel allocation unit of the virtual driver node checks the destination MAC address in the virtual MAC terminal DB. If the MAC address of the non-virtual driver node is not found in the virtual MAC terminal DB, the channel allocation unit of the virtual driver node judges that the destination node of the corresponding frame is a node that does not use the virtual MAC driver, and thus the transmitted frame processing unit transmits the frame using the common channel. Through the above-described process, the communication between the virtual driver node and the non-virtual driver node becomes possible.

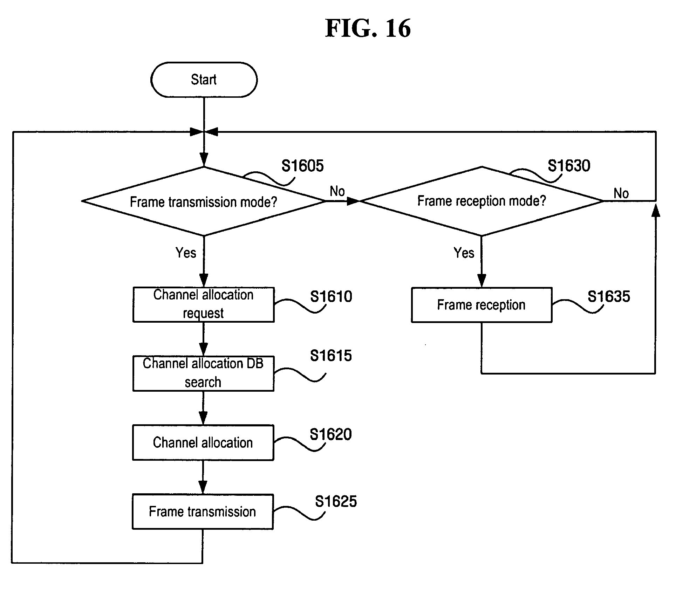

Figure 16 is a flowchart illustrating a method for transmitting or receiving data through a plurality of wireless links through a virtual MAC driver according to an exemplary embodiment of the present invention. This method will now be explained along with the contents illustrated in Figure 7.

If the transmitted frame processing unit 740 of the virtual MAC driver 630 receives a frame from the kernel-network device driver interface 620, the transmitted frame processing unit 740 judges whether the present mode is a frame transmission mode (operation S1605), and requests a channel allocation from the channel allocation unit 710 (operation S1610). The channel allocation unit 710 has the channel allocation DB 712 as illustrated in Figure 8, and information on channels used by other nodes, which has been received from the VIP management unit 730, and information on channel statuses received from the channel quality measurement unit 720 are stored in the channel allocation DB 712. Accordingly, the channel allocation unit 710 searches the channel allocation DB 712 (operation S1615), and allocates a channel through which the frame will be transmitted (operation S1620). Then, the channel allocation unit 710 transfers information on the allocated channel to the transmitted frame processing unit 740, and the transmitted frame processing unit 740 transmits the frame through the allocated channel (operation S1625).

On the other hand, if the received frame processing unit 750 of the virtual MAC driver 630 receives data from the virtual-actual MAC interface 640, the received frame processing unit 750 judges whether the present mode is a frame reception mode (operation S1630), receives the frame (operation S1635), and then transfers the received frame to the kernel-network device driver interface 620. In this case, the received frame processing unit 750 multiplexes receiving paths according to the plurality of wireless links to one wireless network interface.

As described above, according to exemplary embodiments of present invention, wireless packets are transmitted or received using a plurality of wireless links in a wireless network interface, and thus wireless data can be transmitted or received more efficiently.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A network device, for communicating data through a plurality of wireless links, which has a virtual MAC address that represents MAC addresses for identifying respective wireless LAN devices on a network, the network device comprising:
a virtual MAC information packet (VIP) management unit (730) which is configured to transmit or receive information on the plurality of wireless links;
a transmitted frame processing unit (740) which is configured to allocate frames to be transmitted to a specified wireless link among the wireless links and to transmit the frames; and
a channel allocation unit (710) which is configured to receive a wireless link allocation request from the transmitted frame processing unit (740), to select a wireless link to which the frames will be allocated by using the information on the plurality of wireless links, and to transfer the information on the selected wireless link to the transmitted frame processing unit (740);
wherein wireless data communications with neighboring wireless network devices are performed through the virtual MAC address.

2. The network device as claimed in claim 1, further comprising a channel quality measurement unit (720) which is configured to measure qualities of the plurality of wireless links.

3. The network device as claimed in claim 2, wherein the channel quality measurement unit (720) comprises:
a channel status analysis unit (724) which is configured to measure link statuses of physical layers of the plurality of wireless links; and
a channel status DB (722) which is configured to store the link statuses.

4. The network device as claimed in claim 3, wherein the link statuses are measured by using a ratio of a power of a received signal to a noise power of the received signal.

5. The network device as claimed in claim 3, wherein the channel status analysis unit (724) measures a degree of frame collision of a MAC layer.

6. The network device as claimed in any preceding claim, wherein the VIP management unit comprises:
a VIP generation unit (734) which is configured to generate link information that is used by the network device itself and to transmit the generated link information to neighboring network devices;
a VIP reception unit (736) which is configured to receive the link information from the neighboring network devices; and
a virtual MAC terminal DB (732) which is configured to store the link information generated by the VIP generation unit (734) and the link information received by the VIP reception unit (736).

7. The network device as claimed in claim 6, wherein the virtual MAC terminal DB (732) stores information on links which are in use.

8. The network device as claimed in claim 2 or any of claims 3 to 7 when dependent thereon, wherein the channel allocation unit (710) comprises:
a channel allocation processing unit (714) which is configured to receive information on the link qualities from the channel quality measurement unit (720) and information on the links which are in use by other nodes from the VIP management unit; and
a channel allocation DB (712) which is configured to store the received information;
wherein the channel allocation processing unit (714) receives a link allocation request from the transmitted frame processing unit (740), selects a wireless link to which the frames are to be allocated by searching the channel allocation DB (712) according to the request, and transfers information on the selected wireless link to the transmitted frame processing unit (740).

9. The network device as claimed in claim 8, wherein the channel allocation DB (712) includes destination MAC addresses, destination IP addresses, source IP addresses and information on allocated links for kinds of transmitted frames.

10. The network device as claimed in claim 9, wherein the frames are allocated to a same link only if the destination MAC addresses, destination IP addresses and source IP addresses of the frames are the same.

11. The network device as claimed in any preceding claim, further comprising a received frame processing unit (750) which is configured to receive data from the neighboring wireless network devices.

12. A method for communicating data through a plurality of wireless links of a network device, which has a plurality of wireless LAN devices and a virtual MAC address that represents MAC addresses for identifying the plurality of wireless LAN devices, respectively, the method comprising:
(a) transmitting or receiving information on the plurality of wireless links for communication of wireless data with neighboring wireless network devices; and
(b) allocating frames to be transmitted to a specified wireless link among the plurality of wireless links and transmitting the frames using the virtual MAC address;
wherein step (b) allocates the frames to the specified wireless link using the information on the wireless link in accordance with a wireless link allocation request.

13. The method as claimed in claim 12, wherein step (a) further comprises measuring qualities of the plurality of wireless links.

14. The method as claimed in claim 13, wherein measuring the qualities of the wireless links comprises:
measuring link statuses of physical layers of the plurality of wireless links; and
storing the link statuses.

15. The method as claimed in claim 14, wherein the link statuses are measured by using a ratio of a power of a received signal to a noise power of the received signal.

16. The method as claimed in claim 14, wherein measuring the link statuses measures a degree of frame collision of a MAC layer.

17. The method as claimed in claim 12, wherein step (a) comprises:
generating link information that is used by the network device and transmitting the generated link information to neighboring network devices;
receiving link information used by the respective neighboring network devices from the neighboring network devices; and
storing the link information which is transmitted and the link information which is received.

18. The method as claimed in claim 17, wherein the storing stores information on wireless links which are in use.

19. The method as claimed in claim 12, wherein the frames are allocated to the specified wireless link according to destination MAC addresses, destination IP addresses, and source IP addresses of the frames.

20. The method as claimed in claim 19, wherein the frames are allocated to the same link only if the destination MAC addresses, destination IP addresses and source IP addresses of the frames are the same.

21. The method as claimed in claim 12, further comprising receiving data from the neighboring wireless network devices.
